# EUROPEAN PATENT APPLICATION

(11) **EP 4 817 979 A1**
(43) Date of publication of application: **07.10.2026**
(21) Application number: 24897028.7
(22) Date of filing: 02.09.2024
(51) Int. Cl.: B60W 30/16, B60W 40/06, B60W 40/13

(54) **VEHICLE CONTROL DEVICE, VEHICLE CONTROL PROGRAM, AND VEHICLE CONTROL METHOD**

(30) Priority: 30.11.2023 JP 2023203182
(71) Applicant: DENSO CORPORATION, Kariya-city, Aichi 448-8661 (JP)
(72) Inventor: KUBOTA, Masaru, Kariya-city, Aichi 448-8661 (JP); KAMIO, Shigeru, Kariya-city, Aichi 448-8661 (JP); LIU, Haibo, Kariya-city, Aichi 448-8661 (JP); KAWAI, Keisuke, Kariya-city, Aichi 448-8661 (JP)
(74) Representative: TBK
(86) International application number: PCT/JP2024/031514
(87) International publication number: WO 2025/115337

(57) **Abstract**

A vehicle control apparatus includes: a target torque calculation unit configured to calculate a first target torque that changes an inter-vehicle distance from a preceding vehicle to a following vehicle following the preceding vehicle; a torque recording unit configured to record an actual torque generated based on the first target torque until the inter-vehicle distance reaches a specific inter-vehicle distance provided between the following vehicle and the preceding vehicle; and a distance setting unit configured to set the inter-vehicle distance to a corresponding inter-vehicle distance corresponding to a value within a specific range including a minimum value among the recorded actual torques.

## Description

### [Cross-Reference to Related Application]

The present application is based on and claims the benefit of priority from Japanese Patent Application No. 2023-203182, filed on November 30, 2023, the description of which is incorporated herein by reference.

### [Technical Field]

The present disclosure relates to a vehicle control apparatus, a vehicle control program, and a vehicle control method.

### [Background Art]

A conventional art disclosed in PTL 1 calculates an air-resistance increase/decrease ratio based on a reference torque and an actual torque, and causes platooning at an inter-vehicle distance at which the air resistance-increase/decrease ratio satisfies a target value.

### [Citation List]

### [Patent Literature]

[PTL 1] JP 2021-059131 A

### [Summary]

As a result of detailed examination by the inventors, an issue has been found in the conventional art in that, even if the air-resistance increase/decrease ratio satisfies the target value, a following vehicle does not necessarily travel at an inter-vehicle distance at which gain may be maximum or a value close to the maximum, that is, an inter-vehicle distance at which running resistance is minimum or a value close to the minimum. In this way, there is room for improvement in the conventional art in terms of suppressing consumption of running energy in a following vehicle following a preceding vehicle.

The present disclosure has been achieved in light of the above-described issues. An object of the present disclosure is to provide a vehicle control apparatus that suppresses consumption of running energy in a following vehicle, a vehicle control program, and a vehicle control method.

To achieve the above-described object, the present disclosure provides a vehicle control apparatus that includes: a target torque calculation unit configured to calculate a first target torque that changes an inter-vehicle distance from a preceding vehicle to a following vehicle following the preceding vehicle; a torque recording unit configured to record an actual torque generated based on the first target torque until the inter-vehicle distance reaches a specific inter-vehicle distance provided between the following vehicle and the preceding vehicle; and a distance setting unit configured to set the inter-vehicle distance to a corresponding inter-vehicle distance corresponding to a value within a specific range including a minimum value among the recorded actual torques.

The present disclosure provides a vehicle control program that causes at least a single processor to perform processes including: calculating a first target torque that changes an inter-vehicle distance from a preceding vehicle to a following vehicle following the preceding vehicle; recording an actual torque generated based on the first target torque until the inter-vehicle distance reaches a specific inter-vehicle distance provided between the following vehicle and the preceding vehicle; and setting the inter-vehicle distance to a corresponding inter-vehicle distance corresponding to a value within a specific range including a minimum value among the recorded actual torques.

The present disclosure provides a vehicle control method in which at least a single processor performs processes including: calculating a first target torque that changes an inter-vehicle distance from a preceding vehicle to a following vehicle following the preceding vehicle; recording an actual torque generated based on the first target torque until the inter-vehicle distance reaches a specific inter-vehicle distance provided between the following vehicle and the preceding vehicle; and setting the inter-vehicle distance to a corresponding inter-vehicle distance corresponding to a value within a specific range including a minimum value among the recorded actual torques.

As a result of the present disclosure, consumption of running energy in the following vehicle is able to be suppressed.

### [Brief Description of Drawings]

In the accompanying drawings:
Fig. 1 is a diagram illustrating a vehicle including a vehicle control apparatus according to an embodiment of the present disclosure;
Fig. 2 is a diagram illustrating a hardware configuration of the vehicle control apparatus according to the embodiment of the present disclosure;
Fig. 3 is a diagram illustrating a functional block of the vehicle control apparatus according to the embodiment of the present disclosure;
Fig. 4 is a flowchart for explaining an operation of the vehicle control apparatus according to the embodiment of the present disclosure;
Fig. 5 is a diagram for explaining the operation of the vehicle control apparatus according to the embodiment of the present disclosure;
Fig. 6 is a diagram for explaining the operation of the vehicle control apparatus according to the embodiment of the present disclosure;
Fig. 7 is a diagram for explaining the operation of the vehicle control apparatus according to the embodiment of the present disclosure;
Fig. 8 is a diagram for explaining the operation of the vehicle control apparatus according to the embodiment of the present disclosure;
Fig. 9 is a diagram for explaining the operation of the vehicle control apparatus according to the embodiment of the present disclosure;
Fig. 10 is a diagram for explaining the operation of the vehicle control apparatus according to the embodiment of the present disclosure;
Fig. 11A is a diagram for explaining a correction method for an actual torque;
Fig. 11B is a diagram for explaining the correction method for the actual torque;
Fig. 11C is a diagram for explaining the correction method for the actual torque;
Fig. 12 is a flowchart for explaining an operation of the vehicle control apparatus when a lateral deviation amount is corrected;
Fig. 13 is a diagram illustrating a following vehicle before and after the lateral deviation amount is corrected;
Fig. 14 is a flowchart for explaining a vehicle weight estimation method;
Fig. 15 is a flowchart for explaining an operation of the vehicle control apparatus when a cut-in vehicle is detected; and
Fig. 16 is a diagram illustrating a following vehicle before and after the cut-in vehicle is detected.

### [Description of Embodiments]

An embodiment of the present disclosure will hereinafter be described.

### (Embodiment)

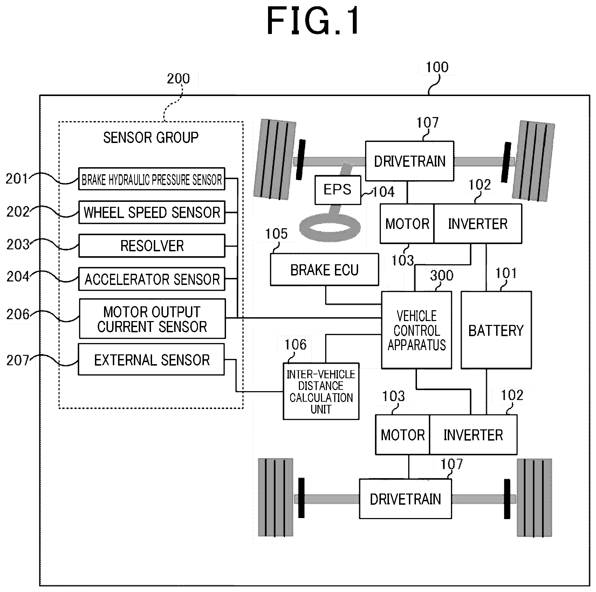

Fig. 1 is a diagram showing a vehicle that includes a vehicle control apparatus according to an embodiment of the present disclosure. A vehicle 100 may include a battery 101, an inverter 102, a motor 103, an electric power steering (EPS) 104, a braking electronic control unit (ECU) 105, an inter-vehicle distance calculation unit 106, a sensor group 200, and a vehicle control apparatus 300.

The battery 101 may be interpreted as a power storage apparatus that includes a plurality of cells. The battery 101 may store power that drives the motor 103 and may store regenerated power from the motor 103. Each of the plurality of cells may be interpreted as a secondary battery, such as a lithium-ion battery, a nickel-hydrogen battery, or a lithium iron phosphate battery.

The inverter 102 may be interpreted as an apparatus that controls rotation of the motor 103. The inverter 102 may control the rotation of the motor 103 by converting direct-current power supplied from the battery 101 to alternating-current power based on a torque from the vehicle control apparatus 300, and supplying the alternating-current power to the motor 103. The vehicle 100 may be provided with a single or a plurality of inverters 102.

The motor 103 may be interpreted as a main motor that generates a driving force that causes the vehicle 100 to travel. The motor 103 may generate a rotational torque that causes the vehicle 100 to travel using the alternating-current power supplied from the inverter 102. The vehicle 100 may be provided with a single or a plurality of motors 103. The rotational torque of the motor 103 is transmitted to a drivetrain 107. The drivetrain 107 may include a driving force transmission system for a front wheel, a tire for the front wheel, a driving force transmission system for a rear wheel, a tire for the rear wheel, and the like.

The EPS 104 may be interpreted as a system that assists in steering a steering wheel with an electric motor. The brake ECU 105 may brake each wheel of the vehicle 100 by driving an actuator (not shown) based on a braking amount.

The sensor group 200 may include a brake hydraulic pressure sensor 201, a wheel speed sensor 202, a resolver 203, an acceleration sensor 204, a motor output current sensor 206, and an external sensor 207.

The brake hydraulic pressure sensor 201 may be interpreted as a sensor that detects hydraulic pressure of a brake. The wheel speed sensor 202 may be interpreted as a sensor that detects a wheel speed (vehicle speed) of the vehicle 100. The resolver 203 may be interpreted as a sensor that detects a rotation angle of a rotor included in the motor 103. The acceleration sensor 204 may be interpreted as a sensor that detects acceleration of the vehicle 100. The motor output current sensor 206 may be interpreted as a sensor that detects an output current supplied to the motor 103.

The external sensor 207 may be interpreted as a sensor that detects a surrounding state of the vehicle 100. The external sensor 207 may include a sensor (such as an in-vehicle millimeter-wave radar, a camera, an in-vehicle sonar sensor, or light detection and ranging (LiDER) that detects an inter-vehicle distance from a following vehicle to a preceding vehicle and outputs the detected inter-vehicle distance as inter-vehicle distance information. The inter-vehicle distance calculation unit 106 may calculate the inter-vehicle distance between the preceding vehicle and the following vehicle based on the inter-vehicle distance information from the external sensor 207. The following vehicle may be interpreted as the vehicle 100 of the present disclosure.

The vehicle control apparatus 300 may be interpreted as an apparatus that controls the inverter 102. The vehicle control apparatus 300 may control a rotation speed, a rotation direction, a torque, and the like of the motor 103 by controlling the inverter 102. Details of a configuration of the vehicle control apparatus 300 will be described hereafter.

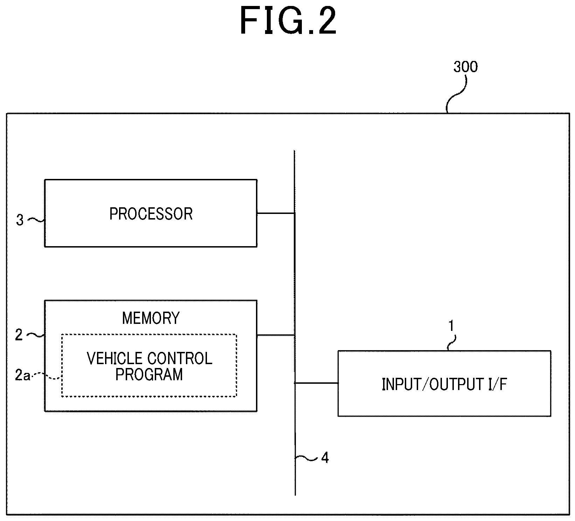

Next, a hardware configuration of the vehicle control apparatus 300 will be described with reference to Fig. 2. Fig. 2 is a diagram showing the hardware configuration of the vehicle control apparatus 300 according to the embodiment of the present disclosure.

The vehicle control apparatus 300 may include an input/output interface (I/F) 1, a memory 2, and a processor 3. The input/output I/F 1, the memory 2, and the processor 3 may be connected by a bus 4 to be capable of communication.

The input/output I/F 1 may be interpreted as an interface for communicating with in-vehicle equipment shown in Fig. 1. The in-vehicle equipment may include the sensor group 200, the inverter 102, the EPS 104, the brake ECU 105, the inter-vehicle distance calculation unit 106, and the like shown in Fig. 1.

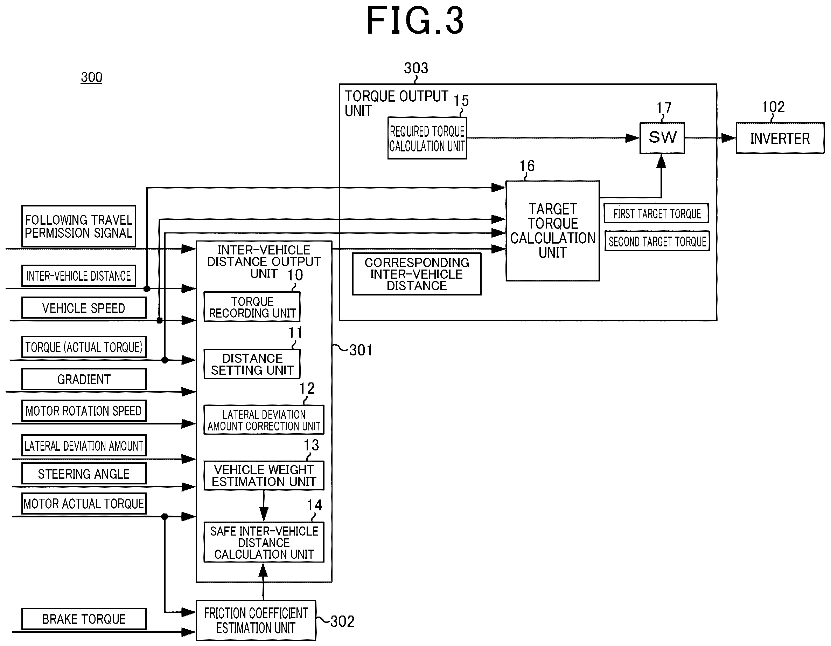

The memory 2 may store therein a vehicle control program 2a for controlling the motor 103 shown in Fig. 1 and the like. The processor 3 may perform a specific process by executing the vehicle control program 2a. Functions actualized by the vehicle control program 2a will be described with reference to Fig. 3.

Next, a functional configuration of the vehicle control apparatus will be described with reference to Fig. 3. Fig. 3 is a diagram showing a functional block of the vehicle control apparatus 300 according to the embodiment of the present disclosure.

The vehicle control apparatus 300 may include an inter-vehicle distance output unit 301, a friction coefficient estimation unit 302, and torque output unit 303. The inter-vehicle distance output unit 301, the friction coefficient estimation unit 302, and the torque output unit 303 may be implemented by the processor 3 shown in Fig. 2 executing the vehicle control program 2a.

### (Inter-vehicle distance output unit 301)

The inter-vehicle distance output unit 301 may estimate the inter-vehicle distance at which an actual torque (running resistance) during traveling of the following vehicle following the preceding vehicle is minimum or a value close to the minimum based on vehicle information, and output information indicating the inter-vehicle distance.

The vehicle information may include a following travel permission signal, the inter-vehicle distance, a lateral deviation amount, a steering angle, the vehicle speed, a gradient, the actual torque, the rotation speed of the motor 103, a brake torque, and the like. The vehicle control apparatus 300 may calculate the gradient based on a value detected by a longitudinal acceleration sensor, an acceleration obtained from the wheel speed, or the like.

The following travel permission signal may be interpreted as a signal that indicates that the following vehicle is permitted to travel such as to follow the preceding vehicle. For example, the following travel permission signal may be output when a driver arbitrarily performs a setting to maintain a fixed distance between the preceding vehicle and the following vehicle. The lateral deviation amount may be interpreted as a relative deviation amount in a lateral direction of the following vehicle to the preceding vehicle. The lateral deviation amount may be interpreted as a deviation amount of the following vehicle in the lateral direction from near a center in a lateral width direction (vehicle width direction) of the preceding vehicle.

The actual torque may be interpreted as a torque generated by the motor 103. A fixed correlation is present between a current flowing to the motor 103 and the torque generated by the motor 103. Therefore, the actual torque may be calculated based on the current, an angular velocity of the motor 103, and the like. The current may increase as the running resistance increases and decrease as the running resistance decreases.

The inter-vehicle distance output unit 301 may include a torque recording unit 10, a distance setting unit 11, a lateral deviation amount correction unit 12, a vehicle weight estimation unit 13, a safe inter-vehicle distance calculation unit 14, and the like.

### (Torque recording unit 10)

The torque recording unit 10 may record the actual torque generated based on a first target torque until, for example, the inter-vehicle distance reaches (becomes equal to) a specific inter-vehicle distance.

The first target torque may be interpreted as a target torque that is calculated by a target torque calculation unit 16. The first target torque may be interpreted as a target torque for changing the inter-vehicle distance, a target motor torque, or the like.

The specific inter-vehicle distance may be interpreted as an inter-vehicle distance that is arbitrarily set by the driver to maintain a fixed distance between the preceding vehicle and the following vehicle when, for example, cruise control (CC) is set. The specific inter-vehicle distance may be interpreted as a safe inter-vehicle distance provided between the following vehicle and the preceding vehicle. The safe inter-vehicle distance may be interpreted as a distance that increases a likelihood of avoiding a collision of the following vehicle with the preceding vehicle. Specifically, the safe inter-vehicle distance may be interpreted as a braking distance that may allow avoidance of a collision of the following vehicle with a cut-in vehicle or the like, a distance obtained by a free-running distance being added to the braking distance, or the like. The free-running distance may be interpreted as a distance traveled between when the driver senses danger and depresses the brake until the brake actually begins to operate. The braking distance may be interpreted as a distance traveled from when the brake operates until the following vehicle stops.

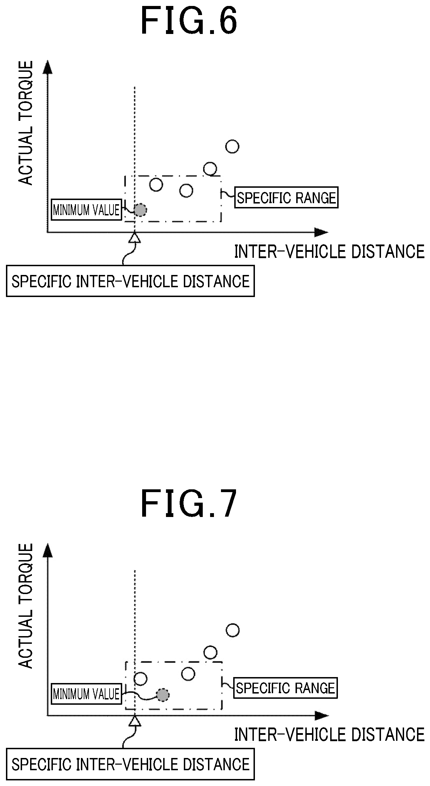

An example of the actual torque recorded by the torque recording unit 10 will be described with reference to Fig. 6 to Fig. 10. These drawings show the actual torque that varies depending on the inter-vehicle distance and the like. A vertical axis represents the actual torque and a horizontal axis represents the inter-vehicle distance. These drawings show a minimum value of the actual torque, the actual torques within a specific range including the minimum value, and the like.

The specific range may be interpreted as a fixed range from an inter-vehicle distance corresponding to the minimum value of the actual torque. For example, in a case in which the inter-vehicle distance is 30 m, the fixed range may be interpreted as a distance corresponding to X% of 30 m (such as ±3 m). For example, X% may include an arbitrary value of several percent to several tens of percent, taking into consideration errors in detection accuracy of the external sensor 207, detection accuracy of the actual torque, and the like.

The actual torques within the specific range may include the minimum value of the actual torque, an actual torque that may be regarded as equivalent to the minimum value, and the like. Specifically, the actual torques within the specific range may include a minimum actual torque, an actual torque that is next smallest to the minimum actual torque, and the like.

In this way, the torque recording unit 10 may record, in chronological order, the actual torque generated based on the first target torque calculated so that the following vehicle approaches the preceding vehicle until, for example, the inter-vehicle distance reaches the safe inter-vehicle distance (specific inter-vehicle distance). As a result, a search for the inter-vehicle distance at which air resistance, that is, the running resistance of the following vehicle traveling such as to follow the preceding vehicle is minimum or a value close to the minimum is able to be performed. That is, a search for the inter-vehicle distance at which consumption of running energy in the following vehicle decreases is able to be performed.

### (Other configuration example 1 of the torque recording unit 10)

The torque recording unit 10 may record the actual torque after correcting the actual torque based on at least one of the vehicle speed of the following vehicle, the gradient that is a tilt of the following vehicle, and the steering angle of the following vehicle.

As a result of the actual torque being corrected based on the gradient, the steering angle, or the like in this manner, the actual torque corresponding to a state in which the following vehicle is traveling is able to be recorded. Therefore, accuracy of the inter-vehicle distance at which consumption of running energy in the following vehicle decreases is able to be improved. Here, details of a correction method for the actual torque will be described hereafter.

### (Other configuration example 2 of the torque recording unit 10)

The torque recording unit 10 may record the actual torque when the lateral deviation amount of the following vehicle falls within a specific range. Specifically, the torque recording unit 10 may record the actual torque when information indicating that the lateral deviation amount falls within the specific range is received. The torque recording unit 10 may interrupt the recording of the actual torque when the information is not received.

As a result, the actual torque is able to be recorded in a state in which a majority of a vehicle body of the following vehicle is positioned within a projection area (projection region) of the preceding vehicle. Here, details of a lateral deviation correction operation to set the lateral deviation amount within the specific range will be described hereafter.

### (Other configuration example 3 of the torque recording unit 10)

The torque recording unit 10 may further record the actual torque generated based on the first target torque when the following vehicle approaches the preceding vehicle until a specific distance at which the inter-vehicle distance becomes shorter than the safe inter-vehicle distance (specific inter-vehicle distance). For example, in a case in which the safe inter-vehicle distance is 20 m, the specific distance may be interpreted as the inter-vehicle distance (such as 15 m) obtained by a distance (such as 5 m) corresponding to N% of 20 m being subtracted from 20 m. For example, N% may include an arbitrary value of several percent to several tens of percent, taking into consideration errors in detection accuracy of the external sensor 207, detection accuracy of the actual torque, and the like.

As a result of the actual torque being recorded until the specific distance, a search for the inter-vehicle distance at which consumption of running energy in the following vehicle decreases is able to be performed.

### (Distance setting unit 11)

The distance setting unit 11 may set the inter-vehicle distance between the preceding vehicle and the following vehicle to, for example, a corresponding inter-vehicle distance corresponding to a value (such as the minimum value) within the specific range of the actual torque recorded as shown in Fig. 6 to Fig. 9. The distance setting unit 11 may output information related to the set corresponding inter-vehicle distance to the target torque calculation unit 16.

The corresponding inter-vehicle distance may be interpreted as the inter-vehicle distance corresponding to the minimum actual torque or may be interpreted as the inter-vehicle distance corresponding the actual torque that is next smallest to the minimum actual torque. In a case in which a plurality of minimum actual torques of a same value are present, the corresponding inter-vehicle distance may be interpreted as the inter-vehicle distance corresponding to any one of the plurality of actual torques. In the case in which a plurality of minimum actual torques of the same value are present, the corresponding inter-vehicle distance may be interpreted as the inter-vehicle distance corresponding to a value corresponding to a position at which the following vehicle is farthest from the preceding vehicle among the plurality of actual torques.

As a result of the inter-vehicle distance being set to the corresponding inter-vehicle distance in this way, the target torque calculation unit 16 is capable of calculating a second target torque based on the corresponding inter-vehicle distance. The second target torque may be interpreted as a target torque for maintaining the corresponding inter-vehicle distance, that is, the inter-vehicle distance at which consumption of running energy in the following vehicle is decreased. Here, details of a configuration of the target torque calculation unit 16 will be described hereafter.

### (Other configuration example 1 of the distance setting unit 11)

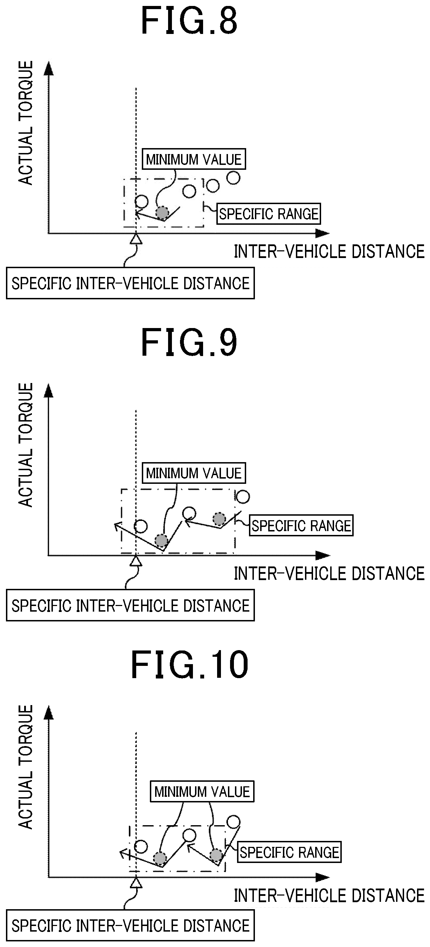

In a case in which a single value when the actual torque changes from decreasing to increasing is present (such as an actual torque indicated by a broken line shown in Fig. 8), the distance setting unit 11 may set the inter-vehicle distance to the corresponding inter-vehicle distance with the single value as the value within the specific range. As a result, the inter-vehicle distance at which consumption of running energy in the following vehicle is minimized is able to be set.

### (Other configuration example 2 of the distance setting unit 11)

In a case in which a plurality of values when the actual torque changes from decreasing to increasing is present (such as two actual torques indicated by broken lines shown in Fig. 9 and Fig. 10), the distance setting unit 11 may set the inter-vehicle distance to the corresponding inter-vehicle distance with any of the plurality of values as the value within the specific range. As a result, the inter-vehicle distance at which consumption of running energy in the following vehicle can be a value close to minimum is able to be set, while processing time for identifying a minimum value while magnitudes of the actual torques are successively compared in chronological order is reduced.

### (Other configuration example 3 of the distance setting unit 11)

In the case in which a plurality of values when the actual torque changes from decreasing to increasing is present, the distance setting unit 11 may set the inter-vehicle distance to the corresponding inter-vehicle distance with a lowest value (see Fig. 9) among the plurality of values as the value within the specific range. As a result, the inter-vehicle distance at which consumption of running energy in the following vehicle is minimized is able to be set.

### (Other configuration example 4 of the distance setting unit 11)

In the case in which a plurality of values when the actual torque changes from decreasing to increasing is present, when the plurality of values are equal (see Fig. 10), the distance setting unit 11 may set the inter-vehicle distance to the corresponding inter-vehicle distance with a value corresponding to a position at which the following vehicle is farthest from the preceding vehicle among the plurality of values as the value within the specific range. As a result, the inter-vehicle distance at which consumption of running energy in the following vehicle is a value close to minimum is able to be set while a safe inter-vehicle distance is maintained.

### (Other configuration example 5 of the distance setting unit 11)

The distance setting unit 11 may compare an actual torque at a first point in time and an actual torque at a second point in time before the first point in time among the actual torques, and set the inter-vehicle distance to the corresponding inter-vehicle distance with the actual torque having a smaller value as a result of the comparison as the value within the specific range.

Specifically, for example, the distance setting unit 11 may compare a latest actual torque detected at a current time and a minimum value among the actual torques detected up to a previous time, among the actual torques detected in chronological order. For example, the comparison may be performed until the following vehicle reaches the safe inter-vehicle distance (specific inter-vehicle distance) or until the following vehicle reaches (becomes equal to) the specific distance described above.

As a result of the comparison, when the actual torque detected at the current time is less than the minimum value among the actual torques detected up to the previous time, the distance setting unit 11 may set the inter-vehicle distance to the corresponding inter-vehicle distance corresponding to the actual torque detected at the current time. In other words, the inter-vehicle distance may be updated. Meanwhile, when the actual torque detected at the current time is greater than the minimum value among the actual torques detected up to the previous time, the setting of the corresponding inter-vehicle distance corresponding to the minimum value among the actual torques detected up to the previous time may be maintained.

As a result of the magnitudes of the actual torques being compared in chronological order in this way, setting of the inter-vehicle distance at which consumption of running energy in the following vehicle can be a value close to minimum is able to be easily performed.

### (Other configuration example 6 of the distance setting unit 11)

The distance setting unit 11 may set the inter-vehicle distance to the corresponding inter-vehicle distance corresponding to a value that is smallest (minimum value) among the actual torques within the specific range. As a result, the inter-vehicle distance at which consumption of running energy in the following vehicle can be a value close to minimum is able to be maintained.

### (Other configuration example 7 of the distance setting unit 11)

When the specific inter-vehicle distance is the safe inter-vehicle distance, the distance setting unit 11 may set the inter-vehicle distance to the safe inter-vehicle distance instead of the corresponding inter-vehicle distance when the corresponding inter-vehicle distance is shorter than the safe inter-vehicle distance. Meanwhile, when the corresponding inter-vehicle distance is longer than the safe inter-vehicle distance, the distance setting unit 11 may set the inter-vehicle distance to the corresponding inter-vehicle distance instead of the safe inter-vehicle distance.

As a result, when the inter-vehicle distance is shorter than the safe inter-vehicle distance, consumption of running energy in the following vehicle is able to be reduced while an inter-vehicle distance prioritizing safety is maintained. In addition, when the inter-vehicle distance is longer than the safe inter-vehicle distance, consumption of running energy in the following vehicle is able to be reduced while a safer inter-vehicle distance is maintained.

### (Other configuration example 8 of the distance setting unit 11)

The distance setting unit 11 may set the inter-vehicle distance to the corresponding inter-vehicle distance during a period in which a specific function is performed. The specific function may include cruise control (CC), a platooning mode, an automated driving mode, an autonomous lane-keeping driving mode, and the like. For example, when the following vehicle does not perform the specific function, the distance setting unit 11 may not set the inter-vehicle distance to the corresponding inter-vehicle distance. When the following vehicle is performing the specific function, the distance setting unit 11 may set the inter-vehicle distance to the corresponding inter-vehicle distance.

As a result of the inter-vehicle distance being set to the corresponding inter-vehicle distance only during the period in which the specific function is performed in this way, for example, in a case in which the specific function is not performed due to manual driving being performed, the driver experiencing discomfort with an acceleration operation may be suppressed. In addition, transition to a travel mode in which consumption of running energy in the following vehicle is reduced is able to be performed at an arbitrary timing of the driver.

### (Lateral deviation amount correction unit 12)

The lateral deviation amount correction unit 12 may correct the relative deviation amount in the lateral direction (lateral deviation amount) of the following vehicle to the preceding vehicle. Specifically, the lateral deviation amount may be set to fall within a specific range by a steering amount of the following vehicle being adjusted based on imaging information including the preceding vehicle imaged by an imaging means.

When the calculated lateral deviation amount exceeds the specific range (specific amount), the lateral deviation amount correction unit 12 may adjust the steering amount of the following vehicle until the lateral deviation amount becomes less than the specific amount. When the lateral deviation amount becomes less than the specific amount, the lateral deviation amount correction unit 12 may output information indicating that the lateral deviation amount is in a state of being within the specific range.

The specific range may be interpreted as a fixed range from a position near the center in the lateral direction (vehicle width direction) of the preceding vehicle. For example, the fixed range may include an arbitrary value of several percent to several tens of percent of the lateral width of the preceding vehicle, taking into consideration errors in detection accuracy of the imaging means and the like.

### (Vehicle weight estimation unit 13)

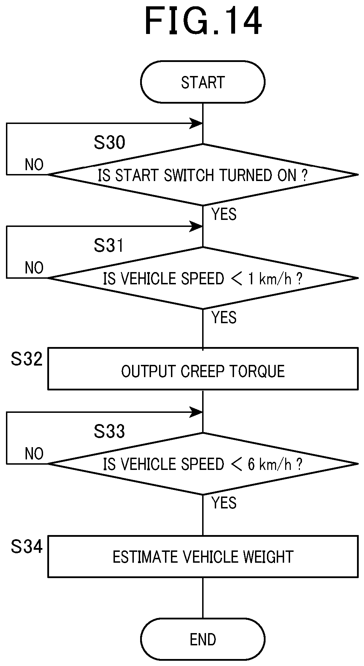

The vehicle weight estimation unit 13 may estimate a weight of the vehicle 100 (vehicle weight). A vehicle weight estimation method will be described in detail with reference to Fig. 14.

Fig. 14 is a flowchart for explaining the vehicle weight estimation method. At step S30, the vehicle weight estimation unit 13 may determine whether a start switch (such as an ignition switch) is turned ON. When the start switch is turned ON (YES at step S30), at step S31, the vehicle weight estimation unit 13 may determine whether the vehicle speed is less than 1 km/h.

When the vehicle speed is less than 1 km/h (YES at step S31), at step S32, the vehicle weight estimation unit 13 may output an instruction for outputting a creep torque. As a result, when the torque output unit 303 outputs the creep torque, at step S33, the vehicle weight estimation unit 13 may determine whether the vehicle speed is less than 6 km/h.

When the vehicle speed is less than 6 km/h (YES at step S33), at step S34, the vehicle weight estimation unit 13 may estimate the vehicle weight based on the actual torque generated in a low-speed state, a wheel speed change amount (ΔVwheel), a reference acceleration at a reference weight, and the like.

### (Friction coefficient estimation unit 302)

Returning to Fig. 3, the friction coefficient estimation unit 302 may estimate a friction coefficient of a road surface on which the vehicle 100 travels and output information indicating the estimated friction coefficient. Specifically, the friction coefficient estimation unit 302 may calculate a friction coefficient µ based on the actual torque (motor actual torque) and the brake torque. The friction coefficient estimation unit 302 may estimate a maximum µ value of the road surface by predicting a position of a peak (µₚₑₐₖ) of the friction coefficient by cubic function approximation based on the calculated friction coefficient µ and a slip rate.

### (Safe inter-vehicle distance calculation unit 14)

The safe inter-vehicle distance calculation unit 14 may calculate the safe inter-vehicle distance based on at least one of the vehicle speed, the vehicle weight, and the friction coefficient of the road surface on which the following vehicle travels. The vehicle weight may be interpreted as the vehicle weight estimated by the vehicle weight estimation unit 13. The friction coefficient may be interpreted as the maximum µ value estimated by the friction coefficient estimation unit 302.

### (Torque output unit 303)

The torque output unit 303 may include a required torque calculation unit 15 and a target torque calculation unit 16.

### (Required torque calculation unit 15)

The required torque calculation unit 15 may calculate a required torque based on the acceleration operation of the driver and output the required torque to a switching unit SW.

### (Target torque calculation unit 16)

The target torque calculation unit 16 may calculate the first target torque for changing the inter-vehicle distance. In addition, the target torque calculation unit 16 may calculate the second target torque for maintaining the corresponding inter-vehicle distance described above, and output the second target torque instead of the first target torque to the switching unit SW. The switching unit SW may output either of the torque output from the torque required torque calculation unit 15 and the torque output from the target torque calculation unit 16 to the inverter 102 (see Fig. 1).

### (Other configuration example of the target torque calculation unit 16)

During a period in which traveling control in which the following vehicle follows the preceding vehicle is performed while the above-described corresponding inter-vehicle distance is maintained, the target torque calculation unit 16 may detect a specific vehicle (cut-in vehicle) cutting in between the preceding vehicle and the following vehicle.

In this case, the corresponding inter-vehicle distance may become shorter than the specific inter-vehicle distance. When the corresponding inter-vehicle distance becomes shorter than the specific inter-vehicle distance in this way, the target torque calculation unit 16 may calculate the first target torque so that the corresponding inter-vehicle distance becomes longer than the specific inter-vehicle distance. Specifically, instead of the second target torque for maintaining the corresponding inter-vehicle distance, the target torque calculation unit 16 may calculate the first target torque for extending the inter-vehicle distance to, for example, a distance amounting to twice the safe inter-vehicle distance (corresponding inter-vehicle distance) before cut-in by the cut-in vehicle, and output the first target torque to the switching unit SW.

In addition, when the inter-vehicle distance exceeds the distance amounting to twice the safe inter-vehicle distance (corresponding inter-vehicle distance), the target torque calculation unit 16 may calculate the first target torque for changing the inter-vehicle distance so that the following vehicle approaches the preceding vehicle, that is, the first target torque that shortens the inter-vehicle distance. At this time, the torque recording unit 10 may record the actual torque generated based on the first target torque until the inter-vehicle distance reaches the specific inter-vehicle distance. In addition, the distance setting unit 11 may set the inter-vehicle distance to the corresponding inter-vehicle distance corresponding to a value within the specific range including the minimum value among the recorded actual torques.

As a result of this configuration, consumption of running energy in the following vehicle following the cut-in vehicle is able to be set to a value close to minimum.

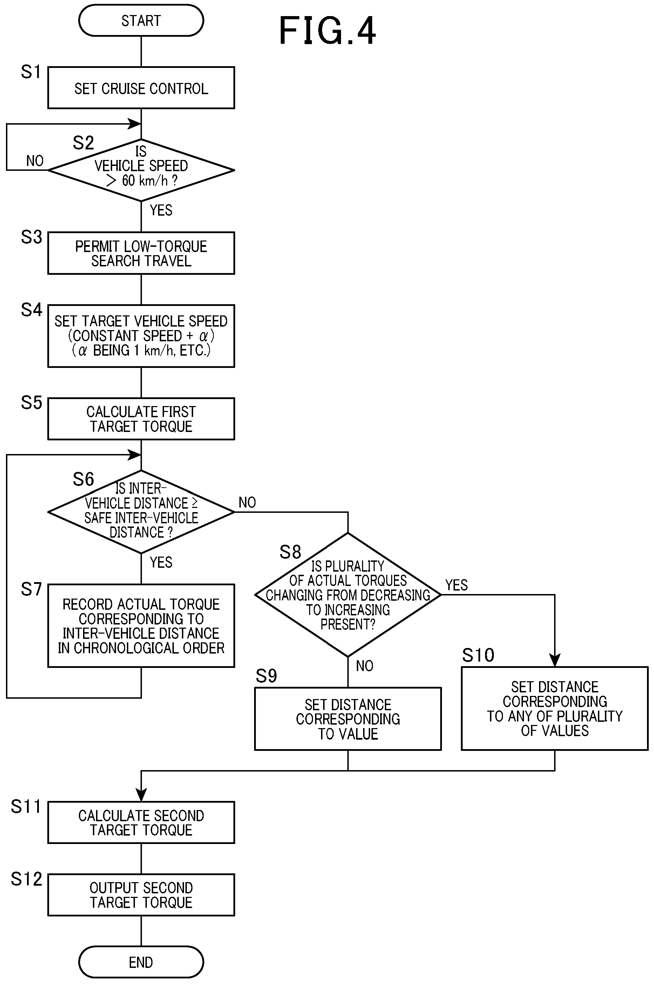

Next, an operation of the vehicle control apparatus 300 will be described with reference to Fig. 4 to Fig. 16. Fig. 4 is a flowchart for explaining the operation of the vehicle control apparatus according to the embodiment of the present disclosure.

When CC is set (ON) at step S1, at step S2, the vehicle control apparatus 300 determines whether the set vehicle speed exceeds a specific vehicle speed (such as 60 km/h).

When the vehicle speed is less than the specific vehicle speed (such as 60 km/h) (NO at step S2), the process at step S2 is repeatedly performed. When the vehicle speed exceeds the specific vehicle speed (YES at step S2), processes at step S3 and subsequent steps are performed.

When low-torque search travel is permitted at step S3, at step S4, the vehicle control apparatus 300 may set a target speed for performing the low-torque search travel. The low-torque search travel may be interpreted as a travel mode in which a search for the inter-vehicle distance at which the actual torque is the minimum value or a value close to the minimum is performed. For example, the low-torque search travel may be started in conjunction with CC or may be manually set (started) by the driver.

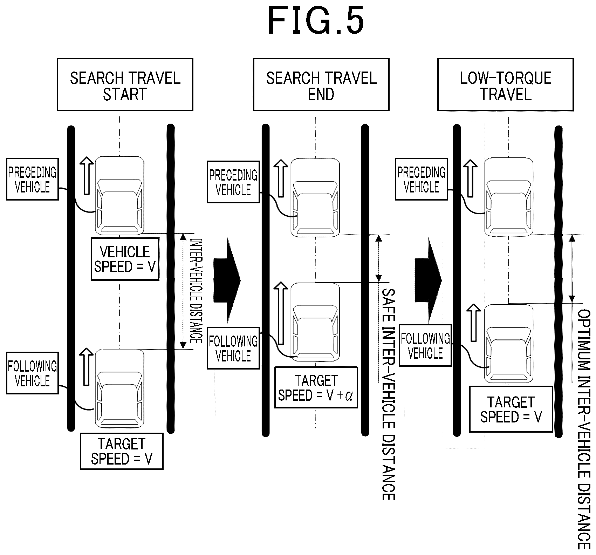

The process at step S4 will be described in detail with reference to Fig. 5. A drawing on a left side in Fig. 5 shows the following vehicle when the low-torque search travel is started. For example, the following vehicle is traveling such as to follow the preceding vehicle at a target speed V (= 70 km/h).

When the low-torque search travel is permitted, as shown in a center drawing in Fig. 5, the target speed V (= 70 km/h) of the following vehicle is updated to, for example, a target speed V + α (α = 1 km/h).

Then, at step S5, the vehicle control apparatus 300 may calculate the first target torque corresponding to the target speed of V + α. As a result, the following vehicle travels such as to shorten the distance to the preceding vehicle. Therefore, the inter-vehicle distance from the following vehicle to the preceding vehicle changes.

At step S6, the vehicle control apparatus 300 compares the inter-vehicle distance and the safe inter-vehicle distance. When the inter-vehicle distance is equal to or greater than the safe inter-vehicle distance (YES at step S6), at step S7, the actual torque corresponding to the inter-vehicle distance may be recorded in chronological order. The processes at step S6 and step S7 may be repeatedly performed until the inter-vehicle distance becomes less than the safe inter-vehicle distance. As a result, the actual torque corresponding to the inter-vehicle distance may be recorded until the inter-vehicle distance becomes less than the safe inter-vehicle distance.

When the inter-vehicle distance is less than the safe inter-vehicle distance (NO at Step S6), the vehicle control apparatus 300 performs a process at step S8. At step S8, the vehicle control apparatus 300 determines whether a plurality of values when the recorded actual torque changes from decreasing to increasing is present.

For example, as shown in Fig. 8, when a single value in which the actual torque changes from decreasing to increasing is present (NO at step S8), at step S9, the vehicle control apparatus 300 may set the inter-vehicle distance to the corresponding inter-vehicle distance with the single value as the value within the specific range.

For example, as shown in Fig. 9 and Fig. 10, when a plurality of values in which the actual torque changes from decreasing to increasing is present (YES at step S8), at step S10, the vehicle control apparatus 300 may set the inter-vehicle distance to the corresponding inter-vehicle distance with any of these values as the value within the specific range.

Specifically, as shown in Fig. 9, the vehicle control apparatus 300 may set the inter-vehicle distance to the corresponding inter-vehicle distance with the lowest value among the plurality of actual torques as the value within the specific range. As shown in Fig. 10, when a plurality of values in which the actual torque changes from decreasing to increasing is present, and these values are equal, the vehicle control apparatus 300 may set the inter-vehicle distance to the corresponding inter-vehicle distance with the value corresponding to the position at which the following vehicle is farthest from the preceding vehicle as the value within the specific range.

At step S11, the vehicle control apparatus 300 may calculate the second target torque for maintaining the set corresponding inter-vehicle distance, and at step S12, may output the second target torque instead of the first target torque. As a result, as shown in a drawing on a right side in Fig. 5, a specific inter-vehicle distance (optimum inter-vehicle distance) at which the torque during traveling of the following vehicle is a small value (low torque) is able to be maintained. That is, the inter-vehicle distance at which consumption of running energy in the following vehicle is minimum or a value close to the minimum is able to be maintained.

### (Actual torque correction method)

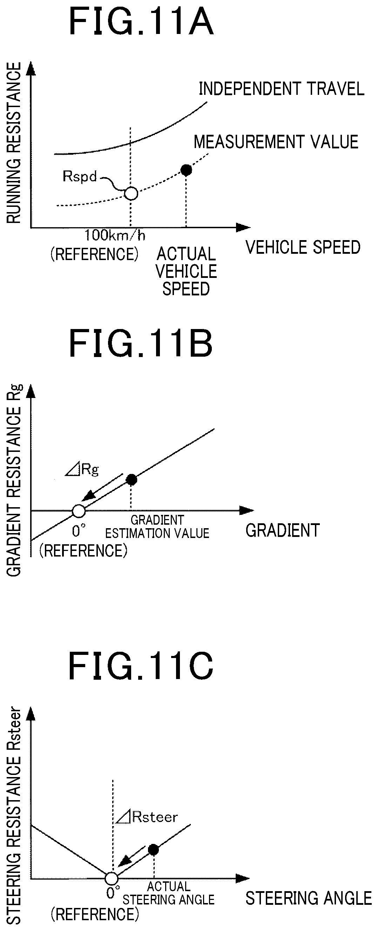

The correction method for the actual torque described above will be described in detail with reference to Fig. 11A to Fig. 11C. Fig. 11A to Fig. 11C are diagrams for explaining the correction method for the actual torque.

Fig. 11A shows a graph showing a relationship between running resistance and vehicle speed. A horizontal axis in the drawing represents the vehicle speed and a vertical axis represents the running resistance The running resistance can be correlated with the actual torque. A solid line indicates the actual torque when the following vehicle is traveling independently without following the preceding vehicle. A broken line indicates the actual torque recorded when the following vehicle is traveling at the first target torque. All of the running resistances change exponentially relative to the vehicle speed.

Fig. 11B shows a graph showing a relationship between gradient resistance and gradient of the road surface. A horizontal axis in the drawing represents the gradient and a vertical axis represents the gradient resistance (Rg). The gradient resistance (Rg) can be correlated with the actual torque.

Fig. 11C shows a graph showing a relationship between steering resistance (Rsteer) and steering angle. A horizontal axis in the drawing represents the steering angle and the vertical axis represents the steering resistance (Rsteer). The steering resistance (Rsteer) can be correlated with the actual torque.

The vehicle control apparatus 300 may calculate a new actual torque by subtracting a gradient resistance change amount (ΔRg) and a steering resistance change amount (ΔRsteer) from the running resistance (Rspd), that is, actual torque when the vehicle speed, the gradient, and the steering angle of the following vehicle are based on, for example, a vehicle speed of 100 km/h, a gradient of 0%, and a steering angle 0° of the following vehicle.

Specifically, as shown in expression (1), below, the value obtained by ΔRg and ΔRsteer being subtracted from Rspd (converted motor torque: Tspd) may be calculated as the new actual torque for setting the specific inter-vehicle distance. The converted motor torque may be interpreted as the actual torque after correction of the actual torque.$Converted motor torque \left(Tspd\right) = Rspd - ΔRg - ΔRsteer$ (1)

The torque recording unit 10 may record the calculated Tspd as the actual torque shown in Fig. 6 to Fig. 10. As a result, accuracy of the specific inter-vehicle distance (optimum inter-vehicle distance) at which consumption of running energy in the following vehicle is minimum or a value close to the minimum is able to be improved.

### (Other operation example 1)

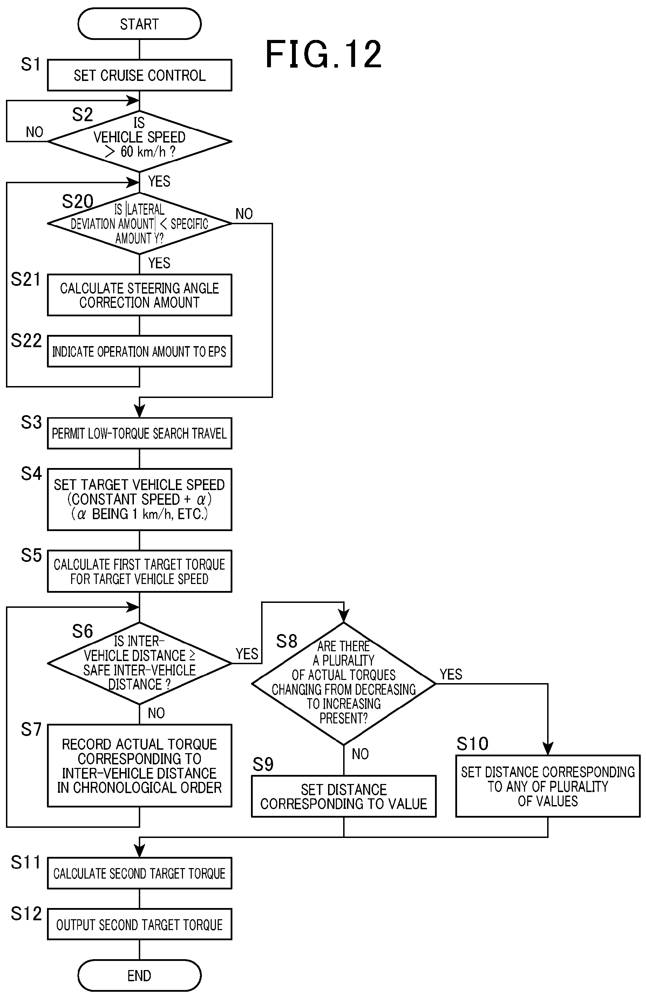

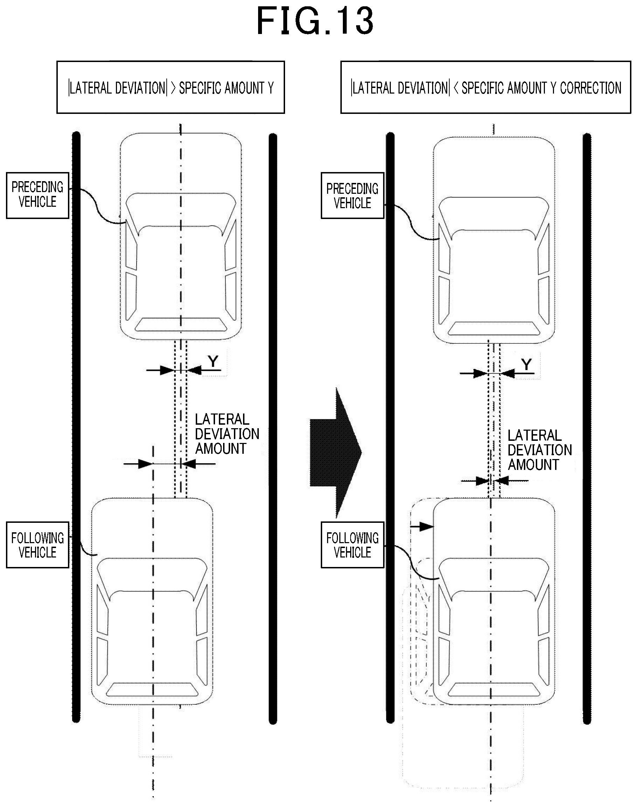

Next, an operation when the lateral deviation amount of the following vehicle is corrected will be described with reference to Fig. 12 and Fig. 13. Fig. 12 is a flowchart for explaining the operation of the vehicle control apparatus when the lateral deviation amount is corrected. Fig. 13 is a diagram showing the following vehicle before and after the lateral deviation amount is corrected. In the flowchart shown in Fig. 12, a difference from the flowchart shown in Fig. 4 is that processes at step S20 to step S22 are added between step S2 and step S3.

When the vehicle speed exceeds the specific vehicle speed (YES at Step S2), at step S20, the lateral deviation amount correction unit 12 determines whether the lateral deviation amount is less than a specific range (specific amount Y).

As shown in a drawing on the left side in Fig. 13, when the lateral deviation amount exceeds the specific amount Y (NO at step S20), the lateral deviation amount correction unit 12 may adjust the steering amount of the following vehicle until the lateral deviation amount becomes less than the specific amount Y. Specifically, at step S21, the lateral deviation amount correction unit 12 may calculate the steering angle correction amount, and at step S22, indicate an operation amount based on the calculated steering angle correction amount to the EPS 104.

As shown in a drawing on the right side in Fig. 13, when the lateral deviation amount is less than the specific amount Y (YES at step S20), the lateral deviation amount correction unit 12 may output information indicating that the lateral deviation amount is in a state of falling within the specific range. When the low-torque search travel is permitted at step 3 in the state in which the information is output, at step S4, the vehicle control apparatus 300 may set the target speed for performing the low-torque search travel.

### (Other operation example 2)

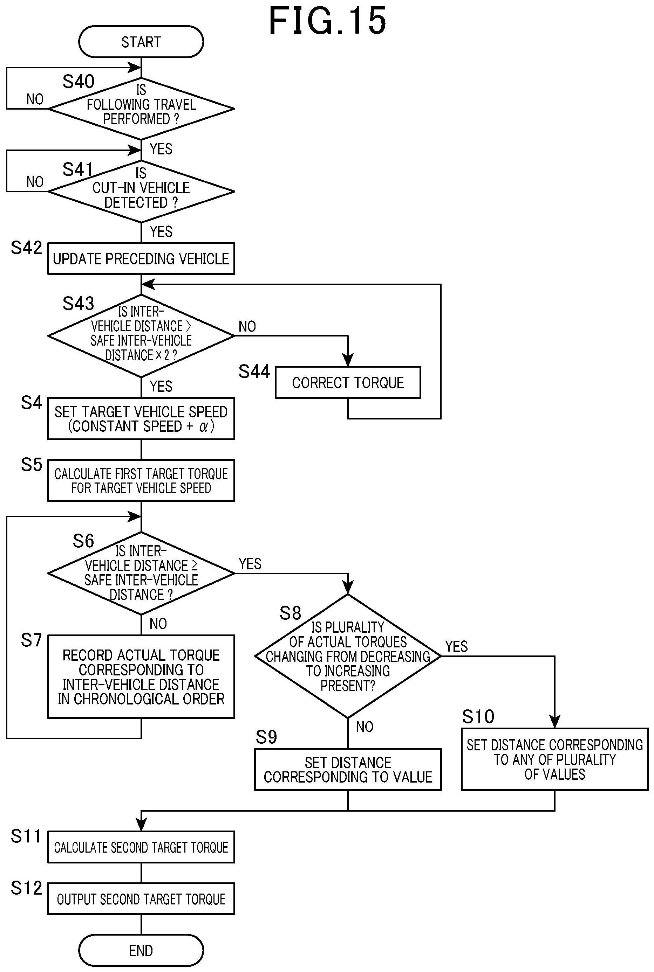

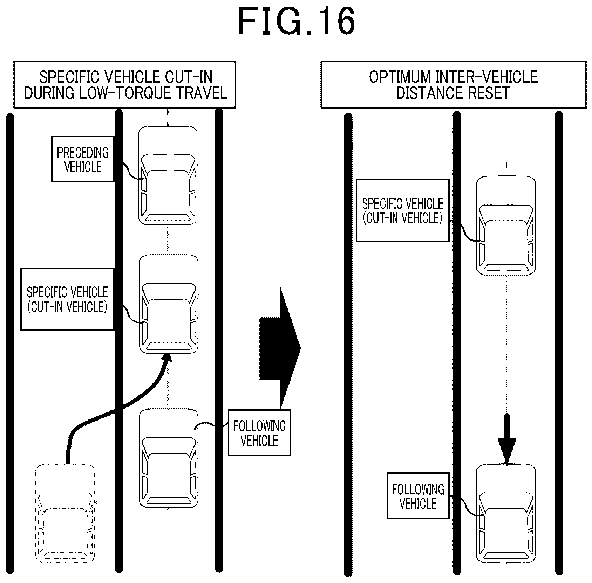

Next, an operation in a case in which a specific vehicle (cut-in vehicle) is detected during the period in which traveling control in which the following vehicle follows the preceding vehicle is performed while the above-described corresponding inter-vehicle distance is maintained will be described with reference to Fig. 15 and Fig. 16.

Fig. 15 is a flowchart for explaining the operation of the vehicle control apparatus when the cut-in vehicle is detected. Fig. 16 is a diagram showing the following vehicle before and after the cut-in vehicle is detected. In the flowchart shown in Fig. 15, a difference from the flowchart shown in Fig. 4 is that processes at step S40 to step S44 are added, and the processes at step S4 and subsequent steps are performed again after step S43.

At step S40, the vehicle control apparatus 300 may determine whether the following vehicle is traveling such as to follow the preceding vehicle. When the following vehicle is traveling such as to follow the preceding vehicle (YES at step S40), at step S41, the vehicle control apparatus 300 may determine whether a cut-in vehicle is detected.

When the cut-in vehicle is detected (YES at step S41), at step S42, the vehicle control apparatus 300 may update the cut-in vehicle to the preceding vehicle, and at step S43, determine whether the inter-vehicle distance from the cut-in vehicle (updated preceding vehicle) to the following vehicle exceeds, for example, a distance amounting to twice the safe inter-vehicle distance (corresponding inter-vehicle distance).

When the inter-vehicle distance is less than the distance amounting to twice the safe inter-vehicle distance (corresponding inter-vehicle distance) (NO at step S43), at step S44, the vehicle control apparatus 300 may correct the first target torque. Specifically, the vehicle control apparatus 300 may calculate the first target torque so that the following vehicle becomes farther from the cut-in vehicle (updated preceding vehicle).

When the inter-vehicle distance exceeds the distance amounting to twice the safe inter-vehicle distance (corresponding inter-vehicle distance) (YES at step S43), the vehicle control apparatus 300 may perform the processes at step S4 and subsequent steps again. In other words, the vehicle control apparatus 300 may calculate the first target torque that changes the inter-vehicle speed so that the following vehicle approaches the preceding vehicle, that is, the first target torque that shortens the distance between vehicles. At this time, the vehicle control apparatus 300 may record the actual torque generated based on the first target torque until the inter-vehicle distance reaches the specific inter-vehicle distance. The vehicle control apparatus 300 may set the inter-vehicle distance to the corresponding inter-vehicle distance corresponding to the value within the specific range including the minimum value among the recorded actual torques.

As a result, consumption of running energy in the following vehicle following the cut-in vehicle is able to be set to a value close to minimum.

### (Workings and effects)

The vehicle control apparatus 300 of the present disclosure calculates the first target torque for changing the inter-vehicle distance from the preceding vehicle to the following vehicle, records the actual torque generated based on the first target torque until the inter-vehicle distance reaches the specific inter-vehicle distance, and sets the inter-vehicle distance to the corresponding inter-vehicle distance corresponding to the value within the specific range including the minimum value among the recorded actual torques.

As a result, the inter-vehicle distance (specific inter-vehicle distance) at which the torque during traveling of the following vehicle is a small value is able to be maintained. Therefore, the following vehicle is able to be made to travel at an inter-vehicle distance at which air resistance generated during traveling is minimum or a value close to the minimum. Consequently, consumption of running energy in the following vehicle is able to be suppressed.

Here, the vehicle of the present disclosure may be a vehicle in which an internal combustion engine is mounted in addition to the motor 103.

In addition, the vehicle control apparatus 300 of the present disclosure may record the actual torque when the lateral deviation amount of the following vehicle is adjusted, and set the inter-vehicle distance to the corresponding inter-vehicle distance using the minimum value of the recorded actual torques or the like. Specifically, for example, when the following vehicle is traveling at a same speed as the preceding vehicle while maintaining a fixed inter-vehicle distance to the preceding vehicle, the vehicle control apparatus 200 may adjust the steering amount so that the lateral deviation amount of the following vehicle falls within the specific range described above. The vehicle control apparatus 300 may record the actual torque detected at this time and set the inter-vehicle distance to the corresponding inter-vehicle distance using the recorded minimum value or the like.

Furthermore, the vehicle control apparatus 300 of the present disclosure may record the actual torque when the following vehicle travels such as to move away (become farther) from the preceding vehicle, and set the inter-vehicle distance to the corresponding inter-vehicle distance using the minimum value of the recorded actual torques or the like. Specifically, the vehicle control apparatus 300 may calculate the target torque so that the following vehicle approaches the preceding vehicle until the specific distance at which the inter-vehicle distances becomes shorter than the safe inter-vehicle distance (specific vehicle distance). When the following vehicle reaches this specific distance, the vehicle control apparatus 300 may calculate the first target torque so that the following vehicle travels such as to move away (become farther) from the preceding vehicle. For example, the vehicle control apparatus 300 may record the actual torque generated based on the first target torque until the inter-vehicle distances reaches a distance amounting to twice the safe inter-vehicle distance. Then, the vehicle control apparatus 300 may set the inter-vehicle distance to the corresponding inter-vehicle distance using the minimum value of the recorded actual torques or the like.

A control unit and a method thereof described in the present disclosure may be actualized by a dedicated computer configuring a processor programmed to provide one or a plurality of functions realized by a computer program. Alternatively, the control unit and the method thereof described in the present disclosure may be actualized by a dedicated computer configuring a processor by a dedicated hardware logic circuit. Alternatively, the control unit and the method thereof described in the present disclosure may be actualized by a single dedicated computer or more, the dedicated computer being configured by a combination of a processor that executes a computer program and a single hardware logic circuit or more.
The computer program may be stored in a non-transitory, tangible storage medium that can be read by a computer as instructions performed by the computer.

### <Supplementary notes>

Features of the present invention are as follows:

### < Supplementary note 1>

A vehicle control apparatus (300) including: a target torque calculation unit (16) configured to calculate a first target torque that changes an inter-vehicle distance from a preceding vehicle to a following vehicle following the preceding vehicle; a torque recording unit (10) configured to record an actual torque generated based on the first target torque until the inter-vehicle distance reaches a specific inter-vehicle distance provided between the following vehicle and the preceding vehicle; and a distance setting unit (11) configured to set the inter-vehicle distance to a corresponding inter-vehicle distance corresponding to a value within a specific range including a minimum value among the recorded actual torques.

### < Supplementary note 2>

The vehicle control apparatus according to the supplementary note 1, in which: in response to a single value when the actual torque changes from decreasing to increasing being present, the distance setting unit sets the inter-vehicle distance to the corresponding inter-vehicle distance with the single value as the value within the specific range.

### < Supplementary note 3>

The vehicle control apparatus according to the supplementary note 1 or 2, in which: in response to a plurality of values when the actual torque changes from decreasing to increasing being present, the distance setting unit sets the inter-vehicle distance to the corresponding inter-vehicle distance with any of the plurality of values as the value within the specific range.

### < Supplementary note 4>

The vehicle control apparatus according to the supplementary note 3, in which: the distance setting unit sets the inter-vehicle distance to the corresponding inter-vehicle distance with a lowest value among the plurality of values as the value within the specific range.

### < Supplementary note 5>

The vehicle control apparatus according to the supplementary note 3, in which: in response to the plurality of values being equal, the distance setting unit sets the inter-vehicle distance to the corresponding inter-vehicle distance with a value corresponding to a position at which the following vehicle is farthest from the preceding vehicle among the plurality of values as the value within the specific range.

### < Supplementary note 6>

The vehicle control apparatus according to any one of the supplementary notes 1 to 5, in which: the distance setting unit compares an actual torque at a first point in time and an actual torque at a second point in time before the first point in time among the actual torques, and sets the inter-vehicle distance to the corresponding inter-vehicle distance with the actual torque having a smaller value as a result of the comparison as the value within the specific range.

### < Supplementary note 7>

The vehicle control apparatus according to any one of the supplementary notes 1 to 6, in which: the target torque calculation unit calculates a second target torque for maintaining the corresponding inter-vehicle distance, and outputs the second target torque instead of the first target torque.

### < Supplementary note 8>

The vehicle control apparatus according to any one of the supplementary notes 1 to 7, in which: the distance setting unit sets the inter-vehicle distance to the corresponding inter-vehicle distance corresponding to the minimum value.

### < Supplementary note 9>

The vehicle control apparatus according to any one of the supplementary notes 1 to 8, in which: the torque recording unit records an actual torque after correcting the actual torque based on at least one of a vehicle speed of the following vehicle, a gradient that is a tilt of the following vehicle, and a steering angle of the following vehicle.

### < Supplementary note 10>

The vehicle control apparatus according to any one of the supplementary notes 1 to 9, further including: a lateral deviation amount correction unit (12) configured to set a relative deviation amount in a lateral direction of the following vehicle to the preceding vehicle to fall within a specific range by adjusting a steering amount of the following vehicle based on imaging information including the preceding vehicle imaged by an imaging unit, in which the distance setting unit sets the inter-vehicle distance to the corresponding inter-vehicle distance when the deviation amount falls within the specific range.

### < Supplementary note 11>

The vehicle control apparatus according to any one of the supplementary notes 1 to 10, in which: in response to the specific inter-vehicle distance being a safe inter-vehicle distance that increases a likelihood of avoiding a collision of the following vehicle with the preceding vehicle, the distance setting unit sets the inter-vehicle distance to the safe inter-vehicle distance instead of the corresponding inter-vehicle distance when the corresponding inter-vehicle distance is shorter than the safe inter-vehicle distance and sets the inter-vehicle distance to the corresponding inter-vehicle distance instead of the safe inter-vehicle distance when the corresponding inter-vehicle distance is longer than the safe inter-vehicle distance.

### < Supplementary note 12>

The vehicle control apparatus according to the supplementary note 11, in which: the torque recording unit further records the actual torque generated based on the first target torque when the following vehicle approaches the preceding vehicle until a specific distance at which the inter-vehicle distance becomes shorter than the safe inter-vehicle distance.

### < Supplementary note 13>

The vehicle control apparatus according to the supplementary note 11, further including: a safe inter-vehicle distance calculation unit (14) configured to calculate the safe inter-vehicle distance based on at least one of a vehicle speed of the following vehicle, a vehicle weight estimated during starting of the following vehicle, and a friction coefficient of a road surface on which the following vehicle travels.

### < Supplementary note 14>

The vehicle control apparatus according to any one of the supplementary notes 1 to 13, in which: the target torque calculation unit calculates, in response to the corresponding inter-vehicle distance becoming shorter than the specific inter-vehicle distance as a result of a specific vehicle cutting in between the preceding vehicle and the following vehicle being detected during a period in which traveling control in which the following vehicle follows the preceding vehicle is performed while the corresponding inter-vehicle distance is maintained, the first target torque so that the corresponding inter-vehicle distance becomes longer than the specific inter-vehicle distance; the torque recording unit records the actual torque generated based on the first target torque until the inter-vehicle distance reaches the specific inter-vehicle distance provided between the following vehicle and the specific vehicle; and the distance setting unit sets the inter-vehicle distance to the corresponding inter-vehicle distance corresponding to the value within the specific range including the minimum value among the recorded actual torques.

### < Supplementary note 15>

The vehicle control apparatus according to the supplementary note 1, in which: the distance setting unit sets the inter-vehicle distance to the corresponding inter-vehicle distance during a period in which a specific function is performed.

### < Supplementary note 16>

A vehicle control program (2a) that causes at least a single processor (3a) to perform processes including: calculating a first target torque that changes an inter-vehicle distance from a preceding vehicle to a following vehicle following the preceding vehicle; recording an actual torque generated based on the first target torque until the inter-vehicle distance reaches a specific inter-vehicle distance provided between the following vehicle and the preceding vehicle; and setting the inter-vehicle distance to a corresponding inter-vehicle distance corresponding to a value within a specific range including a minimum value among the recorded actual torques.

### < Supplementary note 17>

A vehicle control method in which at least a single processor performs processes including: calculating a first target torque that changes an inter-vehicle distance from a preceding vehicle to a following vehicle following the preceding vehicle; recording an actual torque generated based on the first target torque until the inter-vehicle distance reaches a specific inter-vehicle distance provided between the following vehicle and the preceding vehicle; and setting the inter-vehicle distance to a corresponding inter-vehicle distance corresponding to a value within a specific range including a minimum value among the recorded actual torques.

An embodiment of the present invention is described above. However, the present invention is not limited to that described above and can, of course, be modified in various ways in addition to that described above without departing from the spirit of the present invention.

## Claims

1. A vehicle control apparatus (300) comprising:
a target torque calculation unit (16) configured to calculate a first target torque that changes an inter-vehicle distance from a preceding vehicle to a following vehicle following the preceding vehicle;
a torque recording unit (10) configured to record an actual torque generated based on the first target torque until the inter-vehicle distance reaches a specific inter-vehicle distance provided between the following vehicle and the preceding vehicle; and
a distance setting unit (11) configured to set the inter-vehicle distance to a corresponding inter-vehicle distance corresponding to a value within a specific range including a minimum value among the recorded actual torques.

2. The vehicle control apparatus according to claim 1, wherein:
in response to a single value when the actual torque changes from decreasing to increasing being present, the distance setting unit sets the inter-vehicle distance to the corresponding inter-vehicle distance with the single value as the value within the specific range.

3. The vehicle control apparatus according to claim 1, wherein:
in response to a plurality of values when the actual torque changes from decreasing to increasing being present, the distance setting unit sets the inter-vehicle distance to the corresponding inter-vehicle distance with any of the plurality of values as the value within the specific range.

4. The vehicle control apparatus according to claim 3, wherein:
the distance setting unit sets the inter-vehicle distance to the corresponding inter-vehicle distance with a lowest value among the plurality of values as the value within the specific range.

5. The vehicle control apparatus according to claim 3, wherein:
in response to the plurality of values being equal, the distance setting unit sets the inter-vehicle distance to the corresponding inter-vehicle distance with a value corresponding to a position at which the following vehicle is farthest from the preceding vehicle among the plurality of values as the value within the specific range.

6. The vehicle control apparatus according to claim 1, wherein:
the distance setting unit compares an actual torque at a first point in time and an actual torque at a second point in time before the first point in time among the actual torques, and sets the inter-vehicle distance to the corresponding inter-vehicle distance with the actual torque having a smaller value as a result of the comparison as the value within the specific range.

7. The vehicle control apparatus according to claim 1, wherein:
the target torque calculation unit
calculates a second target torque for maintaining the corresponding inter-vehicle distance, and
outputs the second target torque instead of the first target torque.

8. The vehicle control apparatus according to claim 1, wherein:
the distance setting unit sets the inter-vehicle distance to the corresponding inter-vehicle distance corresponding to the minimum value.

9. The vehicle control apparatus according to claim 1, wherein:
the torque recording unit records an actual torque after correcting the actual torque based on at least one of a vehicle speed of the following vehicle, a gradient that is a tilt of the following vehicle, and a steering angle of the following vehicle.

10. The vehicle control apparatus according to claim 1, further comprising:
a lateral deviation amount correction unit (12) configured to set a relative deviation amount in a lateral direction of the following vehicle to the preceding vehicle to fall within a specific range by adjusting a steering amount of the following vehicle based on imaging information including the preceding vehicle imaged by an imaging unit, wherein
the distance setting unit sets the inter-vehicle distance to the corresponding inter-vehicle distance when the deviation amount falls within the specific range.

11. The vehicle control apparatus according to claim 1, wherein:
in response to the specific inter-vehicle distance being a safe inter-vehicle distance that increases a likelihood of avoiding a collision of the following vehicle with the preceding vehicle,
the distance setting unit
sets the inter-vehicle distance to the safe inter-vehicle distance instead of the corresponding inter-vehicle distance when the corresponding inter-vehicle distance is shorter than the safe inter-vehicle distance and
sets the inter-vehicle distance to the corresponding inter-vehicle distance instead of the safe inter-vehicle distance when the corresponding inter-vehicle distance is longer than the safe inter-vehicle distance.

12. The vehicle control apparatus according to claim 11, wherein:
the torque recording unit further records the actual torque generated based on the first target torque when the following vehicle approaches the preceding vehicle until a specific distance at which the inter-vehicle distance becomes shorter than the safe inter-vehicle distance.

13. The vehicle control apparatus according to claim 11, further comprising:
a safe inter-vehicle distance calculation unit (14) configured to calculate the safe inter-vehicle distance based on at least one of a vehicle speed of the following vehicle, a vehicle weight estimated during starting of the following vehicle, and a friction coefficient of a road surface on which the following vehicle travels.

14. The vehicle control apparatus according to claim 1, wherein:
the target torque calculation unit calculates, in response to the corresponding inter-vehicle distance becoming shorter than the specific inter-vehicle distance as a result of a specific vehicle cutting in between the preceding vehicle and the following vehicle being detected during a period in which traveling control in which the following vehicle follows the preceding vehicle is performed while the corresponding inter-vehicle distance is maintained, the first target torque so that the corresponding inter-vehicle distance becomes longer than the specific inter-vehicle distance;
the torque recording unit records the actual torque generated based on the first target torque until the inter-vehicle distance reaches the specific inter-vehicle distance provided between the following vehicle and the specific vehicle; and
the distance setting unit sets the inter-vehicle distance to the corresponding inter-vehicle distance corresponding to the value within the specific range including the minimum value among the recorded actual torques.

15. The vehicle control apparatus according to claim 1, wherein'
the distance setting unit sets the inter-vehicle distance to the corresponding inter-vehicle distance during a period in which a specific function is performed.

16. A vehicle control program (2a) that causes at least a single processor (3a) to perform processes comprising:
calculating a first target torque that changes an inter-vehicle distance from a preceding vehicle to a following vehicle following the preceding vehicle;
recording an actual torque generated based on the first target torque until the inter-vehicle distance reaches a specific inter-vehicle distance provided between the following vehicle and the preceding vehicle; and
setting the inter-vehicle distance to a corresponding inter-vehicle distance corresponding to a value within a specific range including a minimum value among the recorded actual torques.

17. A vehicle control method in which at least a single processor performs processes comprising:
calculating a first target torque that changes an inter-vehicle distance from a preceding vehicle to a following vehicle following the preceding vehicle;
recording an actual torque generated based on the first target torque until the inter-vehicle distance reaches a specific inter-vehicle distance provided between the following vehicle and the preceding vehicle; and
setting the inter-vehicle distance to a corresponding inter-vehicle distance corresponding to a value within a specific range including a minimum value among the recorded actual torques.
